# EUROPEAN PATENT APPLICATION

(11) **EP 4 811 586 A1**
(43) Date of publication of application: **23.09.2026**
(21) Application number: 24893370.7
(22) Date of filing: 18.11.2024
(51) Int. Cl.: H02J 3/02

(54) **DATA CENTER POWER SUPPLY SYSTEM**

(30) Priority: 21.11.2023 CN 202311568343
(71) Applicant: ZTE CORPORATION, Shenzhen, Guangdong 518057 (CN)
(72) Inventor: AN, Yu, Shenzhen, Guangdong 518057 (CN); WANG, Ermin, Shenzhen, Guangdong 518057 (CN); SONG, Tianhao, Shenzhen, Guangdong 518057 (CN); SONG, Bao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/132555
(87) International publication number: WO 2025/108213

(57) **Abstract**

The present application belongs to the technical field of power electronics. Disclosed is a data center power supply system. The power supply system comprises: a plurality of multi-port solid-state transformers, each of which comprises an input end, a first output end and a second output end, wherein the input end is electrically connected to a medium-voltage power grid, each multi-port solid-state transformer is used for converting a medium-voltage alternating current that is input by the input end into a direct current of a first voltage value and a direct current of a second voltage value, the plurality of multi-port solid-state transformers supply power to a plurality of direct-current loads of a data center, the first output end of each multi-port solid-state transformer is electrically connected to the corresponding direct-current load, and the working voltages of the direct-current loads correspond to the first voltage value; and a first inversion module, which is electrically connected to the second output ends of the plurality of multi-port solid-state transformers, and is used for supplying power to alternating-current loads of the data center after inverting direct currents of the second voltage value that are output by the second output ends.

## Description

### CROSS REFERENCE TO RELATED APPLICATIONS

This application claims priority to Chinese Patent Application No. 202311568343.3 filed with the China National Intellectual Property Administration on November 21, 2023, entitled "DATA CENTER POWER SUPPLY SYSTEM", the entirety of which is incorporated herein by reference.

### TECHNICAL FIELD

Embodiments of the present application relate to the technical field of power electronics, and in particular, to a data center power supply system.

### BACKGROUD

Traditional data center power supply systems may be divided into alternating-current power supply systems and direct-current power supply systems based on the loads, different power supply schemes are adopted, requiring the design of different power supply systems according to different voltage systems and levels, which suffers from disadvantages such as high cost, low efficiency, and poor versatility. Therefore, there is a need to construct an alternating-current/direct-current hybrid power supply system, so as to achieve unified and efficient power supply.

### SUMMARY

Embodiments of the present application provide a data center power supply system, which can solve the problems of low power supply efficiency and poor versatility caused by using different power supply systems to supply power to a data center.

In order to solve the above-mentioned technical problems, the application is implemented as follows:
The embodiments of the present application provide a data center power supply system, including: a plurality of multi-port solid-state transformers 100, wherein each multi-port solid-state transformer 100 comprises an input end 101, a first output end 102 and a second output end 103, the input end 101 is electrically connected to a medium-voltage power grid 200, each multi-port solid-state transformer 100 is used for converting a medium-voltage alternating current that is input by the input end 101 into a direct current of a first voltage value and a direct current of a second voltage value, the direct current of the first voltage value is output by the first output end 102, and the direct current of the second voltage value is output by the second output end 103, the first voltage value is less than the second voltage value; the plurality of multi-port solid-state transformers 100 supply power to a plurality of direct-current loads 300 of a data center, the plurality of multi-port solid-state transformers 100 are in one-to-one correspondence with the plurality of direct-current loads 300, the first output end 102 of each multi-port solid-state transformer 100 is electrically connected to the corresponding direct-current load 300, and a working voltage of the direct-current load 300 corresponds to the first voltage value; and a first inversion module 400, which is electrically connected to the second output ends 103 of the plurality of multi-port solid-state transformers 100, and is used for supplying power to alternating-current loads 500 of the data center after inverting the direct current of the second voltage value that are output by the second output ends 103.

The data center power supply system provided by the embodiments of the present application converts an input medium-voltage alternating current into a direct current of a first voltage value and a direct current of a second voltage value by the multi-port solid-state transformers (SST). The direct current of the first voltage value is used to supply power to the direct-current loads of the data center, and the direct current of the second voltage value, after being inverted by the first inversion module, supplies power to alternating-current loads of the data center. The embodiments of the present application can realize hybrid alternating-current/direct-current power supply by multi-port solid-state transformers, which has high integration, saves costs, and can improve the efficiency of the power supply system.

It should be understood that both the foregoing general description and the following detailed description are merely exemplary and explanatory, and are not intended to limit the present application.

### BRIEF DESCRIPTION OF THE DRAWINGS

The accompanying drawings are incorporated herein and constitute a part of the description, they illustrate embodiments consistent with the present application, and are used together with the description to explain the principles of the present application.
FIG. 1 shows a schematic diagram of a data center power supply system according to an exemplary embodiment of the present application;
FIG. 2 shows a schematic diagram of another data center power supply system according to an exemplary embodiment of the present application;
FIG. 3 shows a schematic diagram of yet another data center power supply system according to an exemplary embodiment of the present application;
FIG. 4 shows a schematic diagram of still another data center power supply system according to an exemplary embodiment of the present application.

### Reference signs:

100: multi-port solid-state transformer (first multi-port solid-state transformer / second multi-port solid-state transformer / third multi-port solid-state transformer / fourth multi-port solid-state transformer);
101: input end, 102: first output end, 103: second output end;
200: medium-voltage power grid;
300: direct-current load;
400: first inversion module;
500: alternating-current load;
600: power frequency alternating-current transformer;
700: second inversion module;
800: alternating-current power load;
900: direct-current converter;
110: first energy-storage module;
120: photovoltaic module;
130: first switch;
140: second energy-storage module;
150: second switch.

### DETAILED DESCRIPTION

Exemplary embodiments will be described in detail herein, examples of which are illustrated in the figures. When the following description refers to the figures, the same reference numbers in different figures indicate the same or similar elements unless otherwise indicated. The implementations described in the following exemplary embodiments do not represent all of the implementations consistent with the present application. Instead, they are merely examples of devices and methods consistent with aspects of this application as detailed in the appended claims.

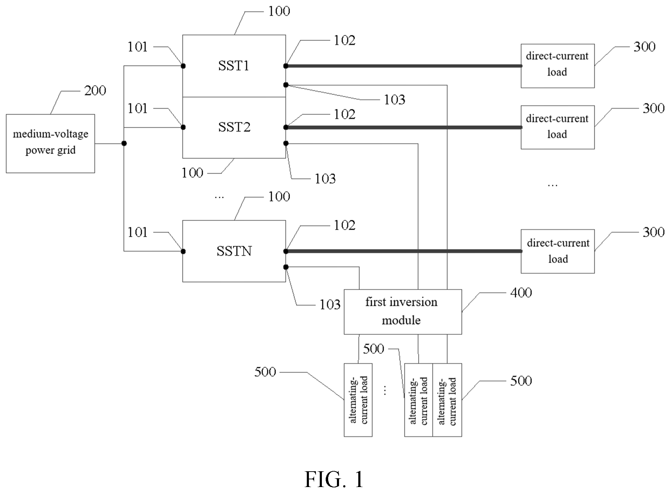

The data center power supply system according to embodiments of the present invention is described below with reference to FIGS. 1-4.

FIG. 1 shows a schematic diagram of a data center power supply system according to an exemplary embodiment of the present application, as shown in FIG. 1, the power supply system mainly includes a plurality of multi-port solid-state transformers 100, a medium-voltage power grid 200, a plurality of direct-current loads 300, a medium-voltage power grid 200, and alternating-current loads 500.

In the embodiments of the present application, there are a plurality of multi-port solid-state transformers (SST) 100, that is, SST1, SST2, ..., SSTN in the drawings, the multi-port solid-state transformer 100 includes an input end 101, a first output end 102 and a second output end 103, wherein the input end 101 is electrically connected to a medium-voltage power grid 200, the multi-port solid-state transformer 100 is used for converting a medium-voltage alternating current that is input by the input end 101 into a direct current of a first voltage value and a direct current of a second voltage value, the direct current of the first voltage value is output by the first output end 102, and the direct current of the second voltage value is output by the second output end 103, wherein the first voltage value is less than the second voltage value; the plurality of multi-port solid-state transformers 100 supply power to a plurality of direct-current loads 300 of a data center, the plurality of multi-port solid-state transformers 100 are in one-to-one correspondence with the plurality of direct-current loads 300, the first output end 102 of each multi-port solid-state transformer 100 is electrically connected to the corresponding direct-current load 300, and a working voltage of the direct-current load 300 corresponds to the first voltage value; and a first inversion module 400, which is electrically connected to the second output ends 103 of the plurality of multi-port solid-state transformers 100, and is used for supplying power to alternating-current loads 500 of the data center after inverting direct currents of the second voltage value that are output by the second output ends 103.

With the data center power supply system according to the embodiments of the present application, the direct current output by the first output end 102 of the multi-port solid-state transformer 100 may supply direct-current power to direct-current loads, and the direct current output by the second output end 103 of the multi-port solid-state transformer 100 is inverted into alternating current by the first inversion module 400, so as to supply alternating-current power to alternating-current loads of the data center, as a result, direct-current and alternating-current power supply may be realized by the same power supply system, which has high integration, saves costs, and can improve the efficiency of the power supply system.

In an optional implementation, the medium-voltage alternating current of the medium-voltage power grid may be 10KV, the 10KV alternating current is input into the multi-port solid-state transformer by the input end, and the multi-port solid-state transformer may convert it into direct currents of two different voltage values, for example, 240V DC and 750V DC. Here, 240V may be a first voltage value, which is output by a first output end of the multi-port solid-state transformer, and 750V may be a second voltage value, which is output by a second output end. Of course, it is not limited thereto, in practical applications, the first voltage value output by the first output end and the second voltage value output by the second output end of the multi-port solid-state transformer may be adjusted according to actual voltages required by direct-current loads and alternating-current loads of the data center.

The first output ends of the multi-port solid-state transformers are electrically connected to direct-current loads of the data center, supplying power to the direct-current loads in a one-to-one correspondence manner, at this time, the working voltage of the direct-current loads is the first voltage value, that is, 240V. The second output end of the multi-port solid-state transformer is electrically connected to the first inversion module, the first inversion module can invert 750V direct-current output by the multi-port solid-state transformer into 380V alternating-current to supply power to alternating-current loads of the data center.

The data center power supply system according to embodiments of the present application converts the input medium-voltage alternating currents into direct currents of two different voltage values by the multi-port solid-state transformer, the direct current with a lower voltage value may supply power to direct-current loads, and the direct current with a higher voltage value may be inverted by the first inversion module, so as to supply power to alternating-current loads. It can not only realize hybrid alternating-current/direct-current power supply, but also the power supply system has high integration, high working efficiency, and can save resources.

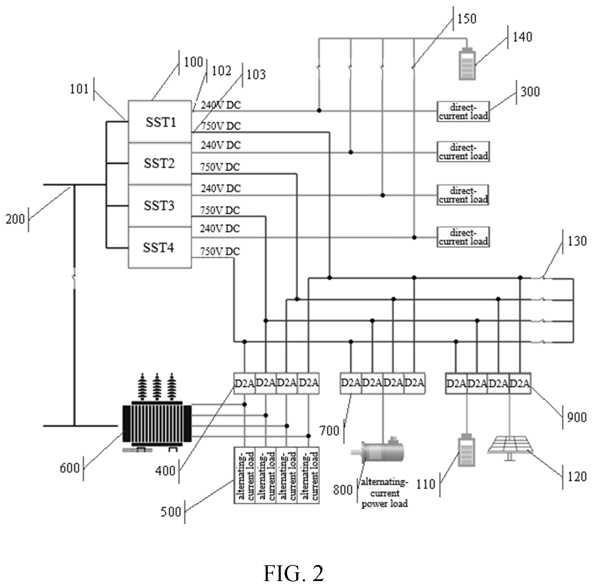

In one implementation, as shown in FIG. 2, the power supply system may further include a power frequency alternating-current transformer 600 electrically connected to the medium-voltage power grid 200, the power frequency alternating-current transformer 600 converts current provided by the medium-voltage power grid 200 into power frequency alternating-current output, so as to supply power to alternating-current loads 500 of the data center. With this implementation, the alternating-current loads of the data center may be powered by the outputs from the power frequency alternating-current transformer 600, or by the alternating-current power output by the first inversion module 400, thereby ensuring the reliability of power supply for alternating-current loads.

In an embodiment of the present application, the first inversion module 400 may include a plurality of inverters (also referred to as converters), as shown in FIG. 2, the first inversion module 400 may include a plurality of inverters (DC-to-AC, D2A), each inverter is electrically connected to a second output end 103 of one multi-port solid-state transformer, and is used to convert direct current of a second voltage value output by the second output end 103 of that multi-port solid-state transformer into alternating current of a target voltage value, and to supply the alternating current to one alternating-current load.

In one implementation, as shown in FIG. 2, the power supply system may further include a second inversion module 700, which is electrically connected to the second output ends 103 of the plurality of multi-port solid-state transformers 100, and is used for supplying power to alternating-current power loads 800 of the data center after inverting direct current of the second voltage value that is output by the second output end 103. Among others, as shown in FIG. 2, the second inversion module 700 may include a plurality of inverters (Direct-to-Avatar, D2A), each inverter is electrically connected to a second output end 103 of one multi-port solid-state transformer, and is used to convert direct current of a second voltage value output by the second output end 103 of that multi-port solid-state transformer into alternating current of a target voltage value, and to supply the alternating current to one alternating-current power load 800.

In one implementation, as shown in FIG. 2, the power supply system may further include a plurality of direct-current converters (DC-to-DC, D2D) 900 and a first energy-storage module 110. The plurality of direct-current converters 900 are in one-to-one correspondence with the plurality of multi-port solid-state transformers 100, a first end of each direct-current converter 900 is electrically connected to a second output end 110 of the corresponding multi-port solid-state transformer 100; and the first energy-storage module 110 is electrically connected to second ends of the plurality of direct-current converters 900. With this implementation, energy may be stored in the first energy-storage module 110 when the medium-voltage power grid operates normally, thereby enabling the first energy-storage module 110 to supply power to the data center when the medium-voltage power grid fails, which further improves the reliability of power supply.

In one implementation, as shown in FIG. 2, the power supply system may further include a photovoltaic module 120 electrically connected to second ends of the plurality of direct-current converters 900. The photovoltaic module 120 can utilize sunlight for energy storage, charging the first energy-storage module 110 by the direct-current converters 900.

In one optional implementation, as shown in FIG. 2, when the data center power supply system operates normally, if the medium-voltage alternating current of the medium-voltage power grid is 10KV, the SST outputs 240V direct-current and 750V direct-current simultaneously, and the first inversion module 400 and the second inversion module 700 operate in a voltage source inverter state. The SST can directly supply power to the 240V DC loads, combined with the characteristics of SST, the power supply efficiency is relatively high; the 380V AC loads may be powered by the power frequency alternating-current transformer, which can improve the efficiency of the power supply system. The 750V direct-current output by the SST may be inverted by the second inversion module 700, so as to supply power to alternating-current power loads of the data center. The 750V bus may be connected to the photovoltaic module 120 via the 750V bus, the photovoltaic module 120 can utilize sunlight to generate direct-current power, and then convert the generated power into 750V direct-current by the direct-current converter. The SST and the photovoltaic module 120 may jointly supply power to the first energy-storage module 110, which can smooth photovoltaic fluctuations without requiring complex power management functions. The energy-storage system (first energy-storage module 110) is disposed on the 750V bus side, which can replace traditional uninterruptible power supply (UPS) batteries.

In one optional implementation of embodiments of the present application, as shown in FIG. 2, the data center power supply system may further include a plurality of first switches 130, the plurality of first switches 130 are in one-to-one correspondence with the plurality of multi-port solid-state transformers 100, and a first end of each first switch 130 is electrically connected to a second output end 103 of the corresponding multi-port solid-state transformer 100, and second ends of the plurality of first switches 130 are electrically connected to each other. With the plurality of first switches 130, a normal SST may be selected to supply power to two alternating-current loads simultaneously when a certain SST fails, so that the first switch 130 corresponding to the normal SST and the first switch 130 corresponding to the failed SST may be closed.

In one optional implementation of embodiments of the present application, as shown in FIG. 2, the data center power supply system according to an embodiment of the present application may further include a second energy-storage module 140 electrically connected to first output ends 102 of the plurality of multi-port solid-state transformers 100. The second energy-storage module 140 is electrically connected to the first output ends 102 of the plurality of multi-port solid-state transformers 100, so that it may be charged and store energy by the first output ends 102 of the plurality of multi-port solid-state transformers 100, when a certain SST fails, it may supply power to a corresponding direct-current load, thereby preventing damage to the direct-current load due to a sudden voltage drop when the SST fails.

Optionally, as shown in FIG. 2, the data center power supply system according to an embodiment of the present application may further include a plurality of second switches 150, the plurality of second switches 150 are in one-to-one correspondence with the plurality of multi-port solid-state transformers 100, a first end of each second switch 150 is electrically connected to a first output end 102 of the corresponding multi-port solid-state transformer 100, and a second end of the second switch 150 is electrically connected to the second energy-storage module 140. With the plurality of second switches 150, a normal SST may be selected to supply power to two direct-current loads simultaneously when a certain SST fails, so that the second switch 150 corresponding to the normal SST and the first switch 150 corresponding to the failed SST may be closed.

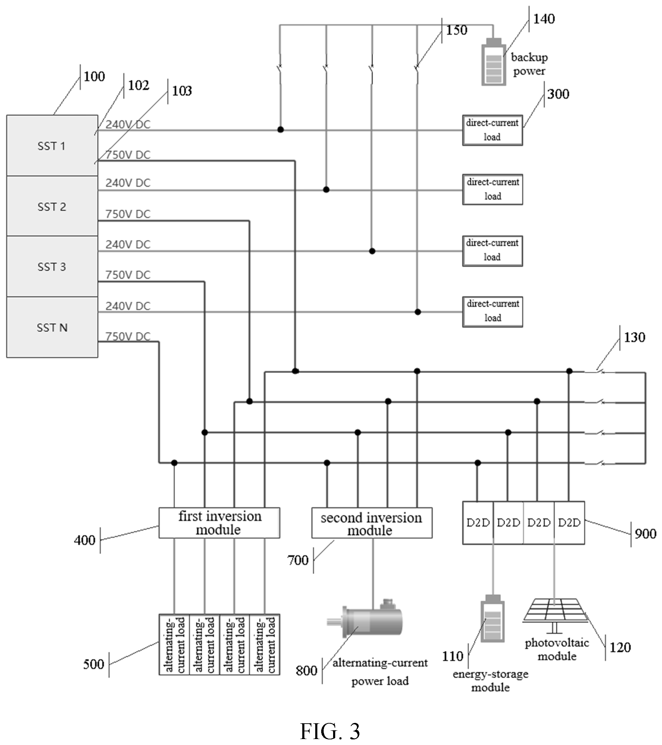

In an optional implementation, as shown in FIG. 3, upon the condition that the medium-voltage power grid 200 fails, the plurality of first switches 130 are closed, the first energy-storage module 110 supplies power to the plurality of direct-current loads 300 via the first output ends 102, and supplies power to the alternating-current loads 500 via the first inversion module 400. Optionally, upon the condition that the medium-voltage power grid 200 fails, the plurality of second switches 150 are closed, and the second energy-storage module 140 supplies power to the plurality of direct-current loads 300.

In the above implementation, upon the condition that the medium-voltage power grid fails, if the medium-voltage alternating current of the medium-voltage power grid is 10KV, the 10KV port of the multi-port SST is closed when the 10KV fails, leaving only the 240V and 750V ports, that is, the input end is closed, and the first output end and the second output end are retained. When the 10KV fails, a plurality of second switches are closed, and a backup power (second energy-storage module) on the 240V-side starts, so as to prevent a sudden drop in the bus voltage on the 240V-side, after the 240V and 750V ports of the multi-port SST operate normally, a plurality of first switches are closed, and the energy-storage system (first energy-storage module) may provide energy via the 750V-side to support continuous load operation. The first energy-storage module may supply power to the plurality of direct-current loads via the first output ends, and may also supply power to alternating-current loads via the first inversion module. When the 10KV fails, since the first inversion module is in an alternating-current voltage source mode, the load power may be supplied by the first inversion module, with its energy provided by the 750V energy-storage system.

It can be seen from the above operating mode that the main energy of the power supply system at this time is provided by the 750V energy-storage system, and the required capacity of the backup-power system on the 240V-side may be significantly reduced, loads on the alternating-current side may also be powered by the 750V-side energy-storage system. Therefore, a single 750V-side energy-storage system can simultaneously meet the backup power requirements of alternating-current and direct-current loads, thereby saving system costs.

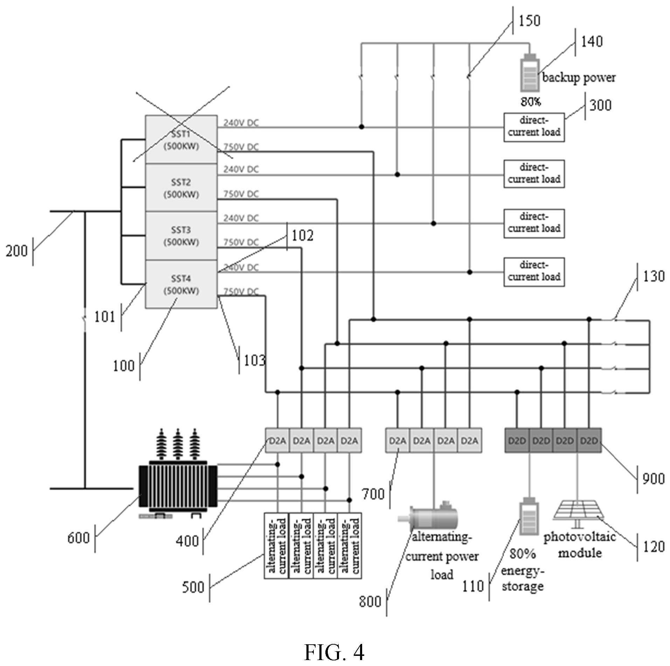

In another optional implementation, as shown in FIG. 4, upon the condition that a first multi-port solid-state transformer 100 among the plurality of multi-port solid-state transformers 100 fails, first switches 130 corresponding to the first multi-port solid-state transformer 100 and at least one second multi-port solid-state transformer 100 are closed, the second multi-port solid-state transformer 100 is a multi-port solid-state transformer 100 among the plurality of solid-state transformers that has not failed. Optionally, upon the condition that a third multi-port solid-state transformer 100 among the plurality of multi-port solid-state transformers 100 fails, second switches 150 corresponding to the third multi-port solid-state transformer 100 and at least one fourth multi-port solid-state transformer 100 are closed, the fourth multi-port solid-state transformer 100 is a multi-port solid-state transformer 100 among the plurality of solid-state transformers that has not failed.

During the design process of an SST, it consists of a plurality of units connected in parallel, the capacity of a unit may be selected as a rated capacity such as 500KVA, when one unit fails, energy may be transferred by a first switch and a second switch, which can improve system reliability. Upon the condition that a multi-port solid-state transformer among the plurality of multi-port solid-state transformers of the power supply system fails, a first switch corresponding to the failed solid-state transformer and a first switch corresponding to a multi-port solid-state transformer that has not failed are closed, or a second switch is closed. The corresponding direct-current load or alternating-current load may be powered by the connected multi-port solid-state transformer that has not failed, thus operating normally.

In yet another optional implementation, upon the condition that the first inversion module 400 fails, the first energy-storage module 110 feeds energy back to the medium-voltage power grid 200 via the plurality of multi-port solid-state transformers 100. When all inverter units fail, the 750V-side energy-storage system (first energy-storage module) may feed energy back to the 10KV medium-voltage power grid via the 750V-side bus using the SST, thereby enabling energy storage-based power supply and implementing an AC 2N+1 architecture, by using the first energy-storage module as a backup device, the required redundancy in the event of a failure may be supported, resulting in a highly available power supply architecture.

Those skilled in the art will readily appreciate other embodiments of the present application after considering the description and practicing the application disclosed herein. The present application is intended to cover any variations, uses or adaptations of the present application, which follow the general principles of the present application and include common knowledge or customary technical means in the art that are not disclosed in the present application. The description and embodiments are to be considered as exemplary only, and the true scope and spirit of the present application are indicated by the claims.

It should be understood that the present application is not limited to the precise structures that are described above and shown in the drawings, and various modifications and changes may be made without departing from the scope thereof. The scope of the present application is limited only by the appended claims.

## Claims

1. A data center power supply system, comprising:
a plurality of multi-port solid-state transformers (100), wherein each multi-port solid-state transformer (100) comprises an input end (101), a first output end (102) and a second output end (103), the input end (101) is electrically connected to a medium-voltage power grid (200), each multi-port solid-state transformer (100) is used for converting a medium-voltage alternating current that is input by the input end (101) into a direct current of a first voltage value and a direct current of a second voltage value, the direct current of the first voltage value is output by the first output end (102), and the direct current of the second voltage value is output by the second output end (103), and the first voltage value is less than the second voltage value;
the plurality of multi-port solid-state transformers (100) supply power to a plurality of direct-current loads (300) of a data center, the plurality of multi-port solid-state transformers (100) are in one-to-one correspondence with the plurality of direct-current loads (300), the first output end (102) of each multi-port solid-state transformer (100) is electrically connected to the corresponding direct-current load (300), and a working voltage of the direct-current load (300) corresponds to the first voltage value; and
a first inversion module (400), which is electrically connected to the second output ends (103) of the plurality of multi-port solid-state transformers (100), and is used for supplying power to alternating-current loads (500) of the data center after inverting the direct current of the second voltage value that is output by the second output ends (103).

2. The power supply system according to claim 1, further comprising:
a power frequency alternating-current transformer (600) electrically connected to the medium-voltage power grid (200), wherein the power frequency alternating-current transformer (600) converts current provided by the medium-voltage power grid (200) into power frequency alternating-current output, so as to supply power to the alternating-current loads (500) of the data center.

3. The power supply system according to claim 1, further comprising:
a second inversion module (700), which is electrically connected to the second output ends (103) of the plurality of multi-port solid-state transformers (100), and is used for supplying power to alternating-current power loads (800) of the data center after inverting the direct current of the second voltage value that is output by the second output ends (103).

4. The power supply system according to claim 2, further comprising:
a plurality of direct-current converters (900), wherein the plurality of direct-current converters (900) are in one-to-one correspondence with the plurality of multi-port solid-state transformers (100), and a first end of each direct-current converter (900) is electrically connected to a second output end (103) of the corresponding multi-port solid-state transformer (100); and
a first energy-storage module (110) electrically connected to second ends of the plurality of direct-current converters (900).

5. The power supply system according to claim 4, further comprising:
a photovoltaic module (120) electrically connected to second ends of the plurality of direct-current converters (900).

6. The power supply system according to claim 4, further comprising: a plurality of first switches (130), wherein the plurality of first switches (130) are in one-to-one correspondence with the plurality of multi-port solid-state transformers (100), and a first end of each first switch (130) is electrically connected to a second output end (103) of the corresponding multi-port solid-state transformer (100), and second ends of the plurality of first switches (130) are electrically connected to each other.

7. The power supply system according to claim 6, wherein upon the condition that a first multi-port solid-state transformer (100) among the plurality of multi-port solid-state transformers (100) fails, first switches (130) corresponding to the first multi-port solid-state transformer (100) and at least one second multi-port solid-state transformer (100) are closed, the second multi-port solid-state transformer (100) is a multi-port solid-state transformer (100) among the plurality of solid-state transformers that has not failed.

8. The power supply system according to claim 6, wherein upon the condition that the medium-voltage power grid (200) fails, the plurality of first switches (130) are closed, the first energy-storage module (110) supplies power to the plurality of direct-current loads (300) via the first output ends (102), and supplies power to the alternating-current loads (500) via the first inversion module (400).

9. The power supply system according to claim 8, wherein upon the condition that the first inversion module (400) fails, the first energy-storage module (110) feeds energy back to the medium-voltage power grid (200) via the plurality of multi-port solid-state transformers (100).

10. The power supply system according to any one of claims 1-9, further comprising:
a second energy-storage module (140) electrically connected to first output ends (102) of the plurality of multi-port solid-state transformers (400).

11. The power supply system according to claim 10, further comprising: a plurality of second switches (150), wherein the plurality of second switches (150) are in one-to-one correspondence with the plurality of multi-port solid-state transformers (100), and a first end of each second switch (150) is electrically connected to a first output end (102) of the corresponding multi-port solid-state transformer (100), and a second end of each second switch (150) is electrically connected to the second energy-storage module (140).

12. The power supply system according to claim 11, wherein upon the condition that a third multi-port solid-state transformer (100) among the plurality of multi-port solid-state transformers (100) fails, second switches (150) corresponding to the third multi-port solid-state transformer (100) and at least one fourth multi-port solid-state transformer (100) are closed, the fourth multi-port solid-state transformer (100) is a multi-port solid-state transformer (100) among the plurality of solid-state transformers that has not failed.

13. The power supply system according to claim 11, wherein upon the condition that the medium-voltage power grid (200) fails, the plurality of second switches (150) are closed, and the second energy-storage module (140) supplies power to the plurality of direct-current loads (300).
